# EUROPEAN PATENT APPLICATION

(11) **EP 1 731 287 A1**
(43) Date of publication of application: **13.12.2006**
(21) Application number: 05727918.4
(22) Date of filing: 30.03.2005
(51) Int. Cl.: B29C 45/26, B29C 45/36, G11B 7/26

(54) **DISC MOLDING DIE, MIRROR-SURFACE PLATE AND MOLDED OBJECT**

(30) Priority: 31.03.2004 JP 2004104288
(71) Applicant: SUMITOMO HEAVY INDUSTRIES, LTD., Shinagawa-ku, Tokyo 141-8686 (JP); SEIKOH GIKEN Co., Ltd., Matsudo-shi, Chiba 2702214 (JP)
(72) Inventor: Shibutani, Yuji; c/o Seikoh Giken Co., Ltd., Matsudo-shi, Chiba;2702214 (JP); Goto, Yoshiyuki; c/o Seikoh Giken Co., Ltd., Matsudo-shi, Chiba;2702214 (JP); Inada, Yuichi; c/o Sumitomo Heavy Industries, Ltd., Chiba-shi, Chiba;2630001 (JP); Sawaishi, H.; c/o Sumitomo Heavy Industries, Ltd., Chiba-shi, Chiba;2630001 (JP)
(74) Representative: Wagner & Geyer
(86) International application number: PCT/JP2005/006047
(87) International publication number: WO 2005/095082

(57) **Abstract**

The invention provides a mold for molding a disk which can uniformly cool a molded product and prevent generation of printing unevenness in a printing region of the molded product, and a molded product molded by use of the mold. The mold includes a first mold plate; a first mirror-surface disk; a second mold plate disposed to advance and retreat in relation to the first mold plate; a second mirror-surface disk forming a cavity in cooperation with the first mirror-surface disk in a mold-clamped condition; a stamper (32) attached to one of the first and second mirror-surface disks and having a fine pattern formed on a front end surface thereof; and a bush (55) extending through the other of the first and second mirror-surface disks. On a front end surface of the other mirror-surface disk, the bush (55) is disposed radially inward of a region for forming a clamp area. In this case, since the area of the front end surface of the bush (55) decreases, lowering of the performance of cooling the molded product can be prevented.

## Description

### TECHNICAL FIELD

The present invention relates to a mold for molding a disk (hereinafter referred to as "disk-molding mold"), a mirror-surface disk, and a molded product.

### BACKGROUND ART

Conventionally, an injection molding machine for molding disk substrates (molded products) has been configured to charge resin melted within a heating cylinder into a cavity formed in a disk-molding mold (see, for example, Patent Document 1).

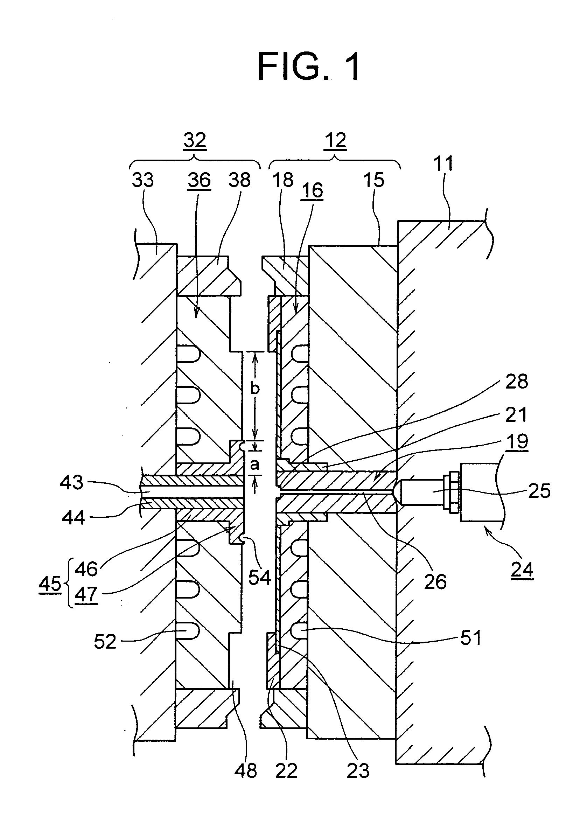

FIG. 1 is a sectional view of a conventional disk-molding mold.

In FIG. 1, reference numeral 11 denotes a stationary platen; reference numeral 12 denotes a stationary-side mold assembly attached to the stationary platen 11; and reference numeral 32 denotes a movable-side mold assembly attached to an unillustrated movable platen. The mold assemblies 12 and 32 constitute a disk-molding mold. In the following description regarding the disk-molding mold, for the mold assembly 12, a side toward an unillustrated cavity formed between the mold assemblies 12 and 32 will be referred to as the "front side," and a side away from the cavity will be referred to as the "rear side." Similarly, for the mold assembly 32, a side toward the cavity will be referred to as the "front side," and a side away from the cavity will be referred to as the "rear side."

An unillustrated mold-clamping mechanism is disposed on the rear side of the movable platen. Through operation of the mold-clamping mechanism, the movable platen is caused to advance and retreat, whereby the mold assembly 32 advances and retreats to contact and move away from the mold assembly 12. In this manner, the disk-molding mold undergoes mold closing, mold clamping, and mold opening. When mold clamping is performed, the above-described cavity is formed.

The mold assembly 12 includes a base plate 15; a mirror-surface disk 16 attached to the base plate 15; an annular guide ring 18 disposed radially outward of the mirror-surface disk 16 and attached to the base plate 15; a sprue bush 19 extending frontward through the base plate 15 and the mirror-surface disk 16; a cylindrical inner stamper holder 21 surrounding the outer circumference of a front half portion of the sprue bush 19 and disposed such that its front end faces the cavity; an annular cavity ring 22 disposed to project toward the mold assembly 32 in the vicinity of the outer circumferential edge of the mirror-surface disk 16; a stamper 23 attached to the front end surface of the mirror-surface disk 16; etc. The inner circumferential edge of the stamper 23 is pressed against the mirror-surface disk 16 by means of the inner stamper holder 21, and the outer circumferential edge of the stamper 23 is pressed against the mirror-surface disk 16 by means of the cavity ring 22.

Incidentally, when resin is fed into the cavity and allowed to solidify therein, a prototype, which is to be processed into a disk substrate, is formed as a preliminary molded product. At this time, fine irregularities are formed on one side of the disk substrate, thereby forming an information face. In order to form the fine irregularities, the stamper 23 has a fine pattern composed of fine irregularities formed on its front end surface. Notably, the cavity ring 22 is provided so as to press the outer circumferential edge of the stamper 23 against the mirror-surface disk 16, and defines the outer circumferential edge of the prototype in the cavity.

A sprue 26 is formed at the center of the sprue bush 19 in order to allow passage of resin injected from an injection nozzle 25 of an injection apparatus 24. The front end of the sprue bush 19 faces the cavity, and a die 28 having a recess is formed at the front end of the sprue bush 19.

The mold assembly 32 includes an unillustrated base plate; an intermediate plate 33 attached to the base plate; a mirror-surface disk 36 attached to the intermediate plate 33; an annular guide ring 38 disposed radially outward of the mirror-surface disk 36 and attached to the intermediate plate 33; a cut punch 43 extending through the base plate, the intermediate plate 33, and the mirror-surface disk 36 such that the cut punch 43 faces the sprue bush 19 and can advance and retreat; a tubular ejector rod 44 surrounding the cut punch 43 and extending through the base plate, the intermediate plate 33, and the mirror-surface disk 36 such that the ejector rod 44 can advance and retreat; a tubular bush 45 surrounding the outer circumference of a front half portion of the ejector rod 44 and extending though the mirror-surface disk 36; etc. The bush 45 has a tubular portion 46 surrounding the ejector rod 44, and an annular flange 47 extending from the front end of the tubular portion 46 radially outward and having an outer diameter of, for example, 33.5 mm. An annular groove 54 is formed on the flange 47 at a position located radially outward from the inner circumferential edge of the flange 47. Notably, the front end of the cut punch 43 has a shape corresponding to that of the die 28.

Further, an annular recess 48 for accommodating the cavity ring 22 is formed along the outer circumferential edge of the front end surface of the mirror-surface disk 36.

In the thus-configured disk-molding mold, when the movable platen is advanced by operating the mold-clamping mechanism to thereby advance the mold assembly 32, mold closing is performed, and the guide rings 18 and 38 are joined by means of rabbets, thereby aligning the mirror-surface disks 16 and 36. Subsequently, the mold-clamping mechanism is operated further so as to perform mold clamping, whereby a cavity is formed between the mold assemblies 12 and 32. In the mold-clamped condition, molten resin is charged into the cavity through the sprue 26. The charged resin is cooled and becomes a prototype. In order to cool the resin within the cavity, a temperature control flow passage 51 is formed in the mirror-surface disk 16, and a temperature control flow passage 52 is formed in the mirror-surface disk 36. Water for temperature control is supplied to the temperature control flow passages 51 and 52.

Subsequently, an unillustrated drive cylinder is operated so as to advance the cut punch 43. The front end of the cut punch 43 enters the die 28, thereby punching a hole in the prototype. The punched prototype is further cooled and becomes a disk substrate (final molded product).

Next, the mold-clamping mechanism is operated so as to retreat the movable platen, thereby retreating the mold assembly 32 for performing mold opening. Through mold opening, the disk substrate is released from the stamper 23. Subsequently, the ejector rod 44 is advanced, thereby pushing out the disk substrate from the mold assembly 32. In this manner, the disk substrate can be taken out.

Incidentally, an annular projection is formed on the disk substrate at a portion corresponding to the groove 54. When a plurality of disk substrates are stacked, the projection serves as a stack rib which forms a small clearance between the stacked disk substrates. In the disk substrate, the punched portion; i.e., a region extending from the inner circumferential edge of the hole portion to the stack rib, serves as a clamp area for fixing the disk substrate when the disk substrate is set to a player; and a region extending from the stack rib to the outer circumferential edge of the disk substrate serves as a signal area in which a fine pattern is transferred by means of the stamper 23. Therefore, a region a of the front end surface of the mold assembly 32, the region extending from the inner circumferential edge of the flange 47 to the groove 54, is provided so as to form a clamp area; and a region b extending from the groove 54 radially outward is provided so as to form the signal area.

In the disk-molding mold having the above-described structure, as described above, the temperature control flow passages 51 and 52 are formed, and the resin and the prototype within the cavity are cooled by means of water flowing through the temperature control flow passages 51 and 52. However, in the mold assembly 32, not only the cut punch 43, the ejector rod 44, etc., but also the above-described bush 45 is disposed in the vicinity of the hole portion of the prototype. Therefore, the prototype cannot be cooled sufficiently. In order to solve this problem, a temperature control flow passage may be formed within the bush 45 so as to cool the prototype via the bush 45. However, since the cooling performance at the bush 45 and that at the mirror-surface disk 36 differ from each other, the prototype cannot be cooled uniformly. As a result, a temperature difference arises between the vicinity of the inner circumferential edge of the disk substrate and the remaining portion. In such a case, when the disk substrate is removed from the disk-molding mold, a difference in compression amount arises between the vicinity of the inner circumferential edge of the disk substrate and the remaining portion, and the disk substrate deforms.

In view of the above, in order to uniformly cool the prototype, as shown in FIG. 1, the front end surface of the bush 45 is formed to slightly project from the front end surface of the mirror-surface disk 36 so as to make the vicinity of the inner circumferential edge of the disk substrate thinner than the remaining portion.
Patent Document 1: Japanese Patent Application Laid-Open (kokai) No. 2002-222545.

### DISCLOSURE OF THE INVENTION

### PROBLEM TO BE SOLVED BY THE INVENTION

However, in the conventional disk-molding mold, since the front end surface of the bush 45 slightly projects from the front end surface of the mirror-surface disk 36, a step is formed along the outer circumferential edge of the bush 45. Accordingly, in a printing region formed on a surface of the disk substrate facing the mold assembly 32, printing unevenness is generated due to the step.

An object of the present invention is to solve the above-mentioned problems in the conventional disk-molding mold and to provide a mold for molding a disk and a mirror-surface disk, which can uniformly cool a molded product and prevent generation of printing unevenness in a printing region of the molded product, and to provide a molded product molded by use of the mold and/or the mirror-surface disk.

### MEANS FOR SOLVING THE PROBLEM

To achieve the above object, a disk-molding mold of the present invention comprises a first mold plate; a first mirror-surface disk attached to the first mold plate; a second mold plate disposed to advance and retreat in relation to the first mold plate; a second mirror-surface disk attached to the second mold plate and forming a cavity in cooperation with the first mirror-surface disk in a mold-clamped condition; a stamper attached to one of the first and second mirror-surface disks and having a fine pattern formed on a front end surface thereof; and a bush extending through the other of the first and second mirror-surface disks.

On a front end surface of the other mirror-surface disk, the bush is disposed radially inward of a region for forming a clamp area.

### EFFECTS OF THE INVENTION

According to the present invention, a disk-molding mold comprises a first mold plate; a first mirror-surface disk attached to the first mold plate; a second mold plate disposed to advance and retreat in relation to the first mold plate; a second mirror-surface disk attached to the second mold plate and forming a cavity in cooperation with the first mirror-surface disk in a mold-clamped condition; a stamper attached to one of the first and second mirror-surface disks and having a fine pattern formed on a front end surface thereof; and a bush extending through the other of the first and second mirror-surface disks.

On a front end surface of the other mirror-surface disk, the bush is disposed radially inward of a region for forming a clamp area.

In this case, on the front end surface of the other mirror-surface disk, the bush is disposed on the radially inner side of the region for forming the clamp area, so that the area of the front end surface of the bush decreases. Accordingly, a molded product can be cooled sufficiently. In addition, the vicinity of the inner circumferential edge of a hole portion of the molded product comes into direct contact with the other mirror-surface disk, like the remaining portion, so that heat is transmitted directly to the other mirror-surface disk.

Accordingly, the molded product can be cooled uniformly. As a result, it is possible to suppress generation of a temperature difference between the vicinity of the inner circumferential edge of the hole portion of the molded product and the remaining portion. Thus, when the molded product is removed from the disk-molding mold, it is possible to suppress generation of a difference in compression amount between the vicinity of the inner circumferential edge of the hole portion and the remaining portion, whereby deformation of the molded product can be prevented. Further, since the performance of cooling the entire molded product can be increased by an amount corresponding to an increase in the performance of cooling the vicinity of the inner circumferential edge of the hole portion of the molded product, the molding cycle can be shortened.

### BRIEF DESCRIPTION OF THE DRAWINGS

FIG. 1 is a sectional view of a conventional disk-molding mold.
FIG. 2 is a sectional view showing a main portion of a disk-molding mold according to a first embodiment of the present invention.
FIG. 3 is a sectional view of the disk-molding mold according to the first embodiment of the present invention.
FIG. 4 is a sectional view showing a main portion of a disk-molding mold according to a second embodiment of the present invention.
FIG. 5 is a sectional view showing a main portion of a disk-molding mold according to a third embodiment of the present invention.

### DESCRIPTION OF SYMBOLS

- 12, 32: mold assembly
- 15: base plate
- 16, 36: mirror-surface disk
- 23: stamper
- 33: intermediate plate
- 55: bush
- 58: groove
- c to f: region
- h1: through hole

### BEST MODE FOR CARRYING OUT THE INVENTION

The embodiments of the present invention will next be described in detail with reference to the drawings.

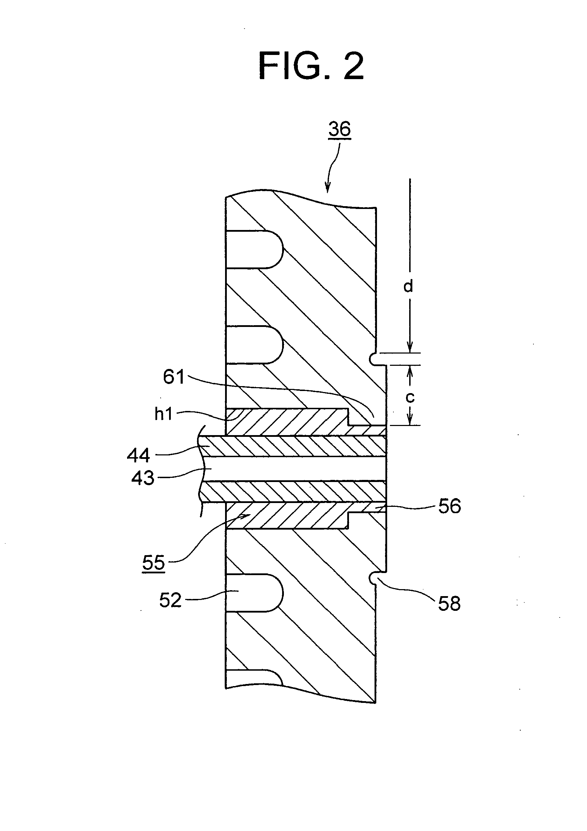

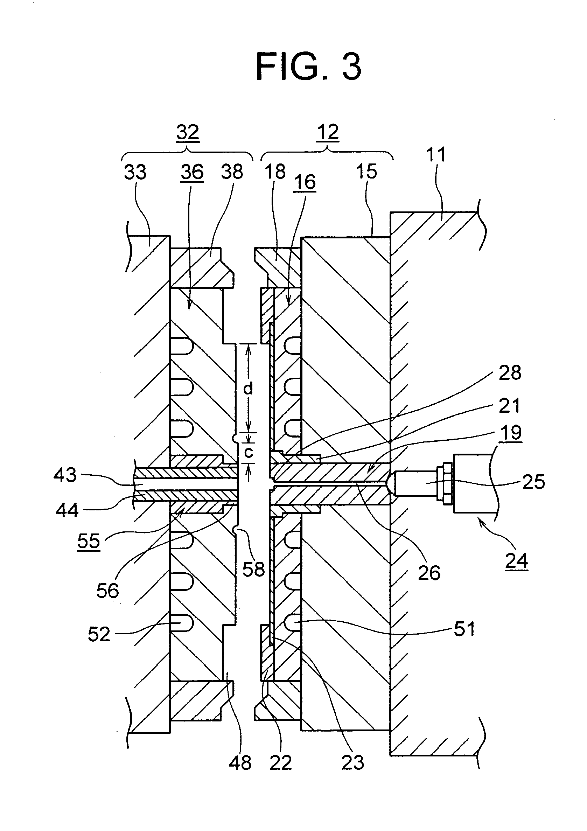

FIG. 2 is a sectional view showing a main portion of a disk-molding mold according to a first embodiment of the present invention; and FIG. 3 is a sectional view of the disk-molding mold according to the first embodiment of the present invention.

In FIGS. 2 and 3, reference numeral 11 denotes a stationary platen (first support member); reference numeral 12 denotes a stationary-side mold assembly attached to the stationary platen 11; and reference numeral 32 denotes a movable-side mold assembly attached to an unillustrated movable platen (second support member). The mold assemblies 12 and 32 constitute a disk-molding mold. In the following description regarding the disk-molding mold, for the mold assembly 12, a side toward an unillustrated cavity formed between the mold assemblies 12 and 32 will be referred to as the "front side," and a side away from the cavity will be referred to as the "rear side." Similarly, for the mold assembly 32, a side toward the cavity will be referred to as the "front side," and a side away from the cavity will be referred to as the "rear side."

An unillustrated mold-clamping mechanism is disposed on the rear side of the movable platen. Through operation of the mold-clamping mechanism, the movable platen is caused to advance and retreat, whereby the mold assembly 32 advances and retreats to contact and move away from the mold assembly 12. In this manner, the disk-molding mold undergoes mold closing, mold clamping, and mold opening. When mold clamping is performed, the above-described cavity is formed. Notably, the stationary platen 11, the movable platen, and the mold-clamping mechanism constitute a mold-clamping apparatus.

The mold assembly 12 includes a base plate (first mold plate) 15; a mirror-surface disk (first mirror-surface disk) 16 attached to the base plate 15; an annular guide ring 18 disposed radially outward of the mirror-surface disk 16 and attached to the base plate 15; a sprue bush 19 extending frontward through the base plate 15 and the mirror-surface disk 16; a cylindrical inner stamper holder 21 surrounding the outer circumference of a front half potion of the sprue bush 19 and disposed such that its front end faces the cavity; an annular cavity ring 22 disposed to project toward the mold assembly 32 in the vicinity of the outer circumferential edge of the mirror-surface disk 16; a stamper 23 or the like (core) attached to the front end surface of the mirror-surface disk 16; etc. The inner circumferential edge of the stamper 23 is pressed against the mirror-surface disk 16 by means of the inner stamper holder 21, and the outer circumferential edge of the stamper 23 is pressed against the mirror-surface disk 16 by means of the cavity ring 22.

Incidentally, when resin (molding material) is fed into the cavity and allowed to solidify therein, a prototype, which is to be processed into a disk substrate, is formed as a preliminary molded product. At this time, fine irregularities are formed on one side of the disk substrate, thereby forming an information face. In order to form the fine irregularities, the stamper 23 has a fine pattern composed of fine irregularities formed on its front end surface. Therefore, when the resin charged into the cavity is cooled, the fine pattern is transferred to the resin, whereby the above-mentioned information face is formed. Notably, the cavity ring 22 is provided so as to press the outer circumferential edge of the stamper 23 against the mirror-surface disk 16, and define the outer circumferential edge of the prototype in the cavity. In the present embodiment, the cavity ring 22 and the stamper 23 are disposed on the mold assembly 12; however, these components may be disposed on the mold assembly 32.

A sprue 26 is formed at the center of the sprue bush 19 in order to allow passage of resin injected from an injection nozzle 25 of an injection apparatus 24. The front end of the sprue bush 19 faces the cavity, and a die 28 having a recess is formed at the front end of the sprue bush 19.

The mold assembly 32 includes an unillustrated base plate; an intermediate plate 33 attached to the base plate; a mirror-surface disk (second mirror-surface disk) 36 attached to the intermediate plate 33; an annular guide ring 38 disposed radially outward of the mirror-surface disk 36 and attached to the intermediate plate 33; a cut punch (machining member) 43 extending through the base plate, the intermediate plate 33, and the mirror-surface disk 36 such that the cut punch 43 faces the sprue bush 19 and can advance and retreat; a tubular ejector rod (ejecting member) 44 surrounding the cut punch 43 and extending through the base plate, the intermediate plate 33, and the mirror-surface disk 36 such that the ejector rod 44 can advance and retreat; a tubular bush 55 surrounding the outer circumference of a front half portion of the ejector rod 44 and extending though the mirror-surface disk 36; etc. The bush 55 has a smaller diameter portion (front end portion) 56 in the vicinity of its front end. The smaller diameter portion 56 has an outer diameter of, for example, 20 mm. Therefore, as shown in FIG. 2, the mirror-surface disk 36 has a through hole h1 formed therein so as to enable the bush 55 to pass through the through hole h1. Further, an annular recess 48 for accommodating the cavity ring 22 is formed along the outer circumferential edge of the front end surface of the mirror-surface disk 36.

Notably, the front end of the cut punch 43 has a shape corresponding to that of the die 28. Further, the base plate and the intermediate plate 33 constitute a second mold plate. In the present embodiment, the bush 55 is provided on the mold assembly 32; however, the bush 55 may be provided on the mold assembly 12.

In the thus-configured disk-molding mold, when the movable platen is advanced by operating the mold-clamping mechanism to thereby advance the mold assembly 32, mold closing is performed, and the guide rings 18 and 38 are joined by means of rabbets, thereby aligning the mirror-surface disks 16 and 36. Subsequently, the mold-clamping mechanism is operated further so as to perform mold clamping, whereby a cavity is formed between the mirror-surface disks 16 and 36. In the mold-clamped condition, resin melted in the injection apparatus 24 is charged into the cavity through the sprue 26. The charged resin is cooled and becomes a prototype. In order to cool the resin within the cavity, a temperature control flow passage 51 is formed in the mirror-surface disk 16, and a temperature control flow passage 52 is formed in the mirror-surface disk 36. Water (medium for temperature control) is supplied to the temperature control flow passages 51 and 52.

Subsequently, an unillustrated drive cylinder is operated so as to advance the cut punch 43. The front end of the cut punch 43 enters the die 28, thereby punching a hole in the prototype. The punched prototype is further cooled and becomes a disk substrate (final molded product).

Next, the mold-clamping mechanism is operated so as to retreat the movable platen, thereby retreating the mold assembly 32 for performing mold opening. Through mold opening, the disk substrate is released from the stamper 23. Subsequently, the ejector rod 44 is advanced, thereby pushing out the disk substrate from the mold assembly 32. In this manner, the disk substrate can be taken out.

Incidentally, in the disk-molding mold having the above-described structure, the temperature control flow passages 51 and 52 are formed, and the resin and the prototype within the cavity are cooled by means of water flowing through the temperature control flow passages 51 and 52. However, in the mold assembly 32, the cut punch 43, the ejector rod 44, the bush 55, etc. are disposed in the vicinity of the hole portion of the prototype. Therefore, depending on the shape of the bush 55, the resin and the prototype cannot be cooled sufficiently.

In order to solve this problem, in the present embodiment, the above-described smaller diameter portion 56 is formed in the vicinity of the front end of the bush 55, and, at the front end portion of the mirror-surface disk 36, the inner circumferential wall of the through hole h1 projects toward the center over a predetermined distance, whereby an annular projection portion 61 is formed. In this case, lowering of the performance of cooling the resin and the prototype can be prevented to a degree which corresponds to a decrease in the area of the front end surface of the bush 55. In addition, the vicinity of the inner circumferential edge of the hole portion of the prototype comes into direct contact with the mirror-surface disk 36, like the remaining portion, so that heat is transmitted directly to the mirror-surface disk 36.

Accordingly, since the prototype can be cooled uniformly, it is possible to suppress generation of a temperature difference between the vicinity of the inner circumferential edge of the hole portion of the prototype and the remaining portion. As a result, when the disk substrate is removed from the disk-molding mold, it is possible to suppress generation of a difference in compression amount between the vicinity of the inner circumferential edge of the hole portion and the remaining portion, whereby deformation of the disk substrate can be prevented. Further, since the performance of cooling the entire prototype can be increased by an amount corresponding to an increase in the performance of cooling the vicinity of the inner circumferential edge of the hole portion of the prototype, the molding cycle can be shortened.

Incidentally, a region of the disk substrate extending from the inner circumferential edge of the hole portion to a predetermined portion must be formed to serve as a flat clamp area for fixing the disk substrate when the disk substrate is set to a player. In view of this, in the present embodiment, on the front end surface of the mirror-surface disk 36, a predetermined region extending radially outward from the inner circumferential edge of the projection portion 61; i.e., the outer circumferential edge of the smaller diameter portion 56 (in the present embodiment, a flat region c having a diameter in a range of 22 to 33 mm and no step) is provided so as to form the clamp area. On the radially inward side of the region c, the front end surface of the smaller diameter portion 56 is located, and a fitting portion between the bush 55 and the mirror-surface disk 36 is formed.

In the disk substrate, a region extending from the clamp area to the outer circumferential edge serves as a signal area in which a fine pattern is transferred by means of the stamper 23. Therefore, a region d extending radially outward from the outer circumferential edge of the region c is provided so as to form the signal area. Notably, in the present embodiment, the region c constitutes a first region, and the region d constitutes a second region.

Further, the front end surface of the smaller diameter portion 56 and the front end surface of the region c slightly project from the front end surface of the region d so as to form a step of 10 to 60 µm, to thereby make the vicinity of the inner circumferential edge of the disk substrate thinner than the remaining portion.

Accordingly, the resin and the prototype can be cooled more quickly to a degree corresponding to a decrease in the thickness at the vicinity of the inner circumferential edge, whereby lowering of the performance of cooling the resin and the prototype can be prevented further. As a result, the resin and the prototype can be cooled more uniformly.

Moreover, when a plurality of disk substrates are stacked, a slight clearance is desirably formed between the disk substrates so as to prevent damage to the information face. In view of this, an annular groove 58 is formed on the mirror-surface disk 36 at a position in close proximity to and radially outward of the region c; i.e., between the regions c and d. Accordingly, an annular projection is formed, as a stack rib, on the disk substrate at a portion corresponding to the groove 58.

Incidentally, in the present embodiment, a step is formed between the front end surface of the region c and the front end surface of the region d. However, since the clamp area of the disk substrate must be formed by use of the region c and the signal area thereof must be formed by use of the region d, a mirror-surface forming process must be performed for both the regions c and d. However, in general, when a mirror-surface forming process is performed for two regions of a single component having different heights, performing the mirror-surface forming process for a portion adjacent to the step is difficult, and cost of the disk-molding mold increases.

In contrast, in the present embodiment, the groove 58 for forming the stack rib is formed between the regions c and d, and the groove 58 is not required to be subjected to the mirror-surface forming process. Therefore, the mirror-surface forming process can be readily performed for the regions c and d.

Therefore, cost of the disk-molding mold can be lowered.

Moreover, the region c can be shifted radially inward by an amount corresponding to an amount by which the outer diameter of the smaller diameter portion 56 can be reduced, whereby the step can be shifted radially inward. Accordingly, in a printing region formed on a surface of the disk substrate facing the mold assembly 32, printing unevenness is not produced because the step is not formed in the printing region.

Next, a second embodiment of the present invention will be described. Notably, components having the same structures as those in the first embodiment are denoted by the same reference numerals, and their descriptions are omitted. As to the effects of the present invention achieved by structural features same as those in the first embodiment, the description of the effects of the first embodiment applies.

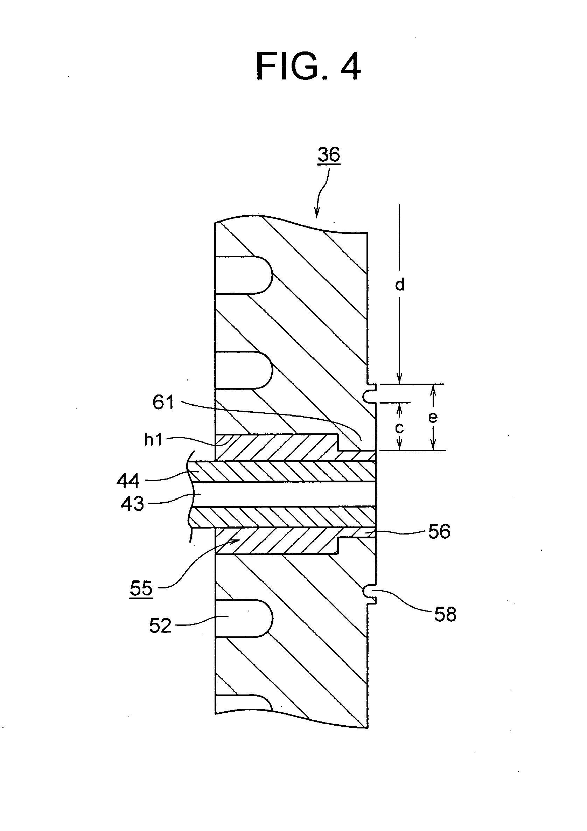

FIG. 4 is a sectional view showing a main portion of a disk-molding mold according to the second embodiment of the present invention.

In this case, since a flat clamp area must be formed on a disk substrate (final molded product) so as to fix the disk substrate to a player, on the front end surface of the mirror-surface disk 36 (second mirror-surface disk), a predetermined region extending radially outward from the inner circumferential edge of the projection portion 61 (in the present embodiment, a flat region c having a diameter in a range of 22 to 33 mm and no step) is provided so as to form the clamp area. The fitting portion between the bush 55 and the mirror-surface disk 36 is formed on the radially inward side of the region c.

Further, an annular groove 58 is formed on the front end surface of the mirror-surface disk 36 at a position in close proximity to and radially outward of the region c to be located adjacent to the outer circumferential edge of the region c. Accordingly, an annular projection is formed, as a stack rib, on the disk substrate at a portion corresponding to the groove 58.

A region d extending radially outward from a position in close proximity to and radially outward of the groove 58 is provided so as to form the signal area.

Further, the front end surface of the smaller diameter portion 56 and the front end surface of a region e extending from the inner circumferential edge of the projection portion 61 to the inner circumferential edge of the region d slightly project from the front end surface of the region d so as to form a step of 10 to 60 µm, to thereby make the vicinity of the inner circumferential edge of the disk substrate thinner than the remaining portion.

Notably, in the present embodiment, the region e constitutes the first region, and the region d constitutes the second region.

Next, a third embodiment of the present invention will be described. Notably, components having the same structures as those in the first embodiment are denoted by the same reference numerals, and their descriptions are omitted. As to the effects of the present invention achieved by structural features same as those in the first embodiment, the description of the effects of the first embodiment applies.

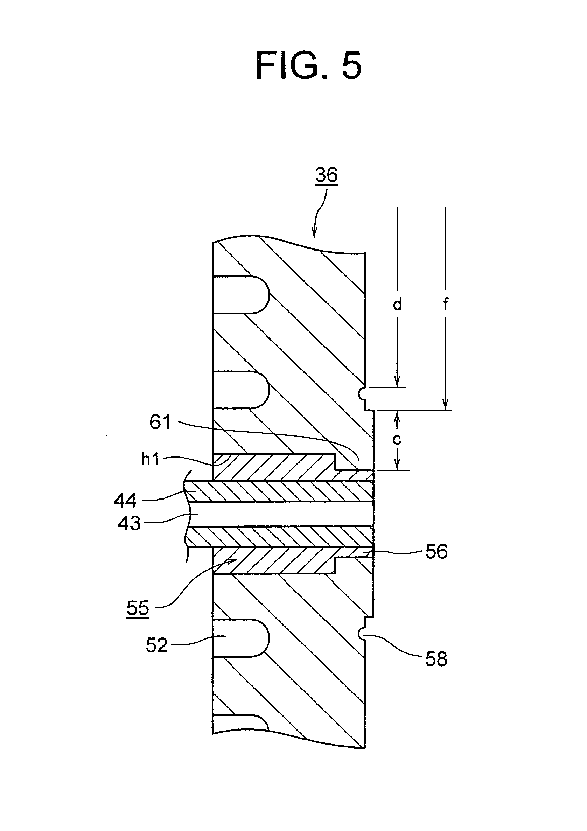

FIG. 5 is a sectional view showing a main portion of a disk-molding mold according to the third embodiment of the present invention.

In this case, since a flat clamp area must be formed on a disk substrate (final molded product) so as to fix the disk substrate to a player, on the front end surface of the mirror-surface disk 36, a predetermined region extending radially outward from the inner circumferential edge of the projection portion 61 (in the present embodiment, a flat region c having a diameter in a range of 22 to 33 mm and no step) is provided so as to form the clamp area. The fitting portion between the bush 55 and the mirror-surface disk 36 is formed on the radially inward side of the region c.

Further, an annular groove 58 is formed on the front end surface of the mirror-surface disk 36 at a position in the vicinity of and radially outward of the region c such that the groove 58 is slightly separated from the outer circumferential edge of the region c. Accordingly, an annular projection is formed, as a stack rib, on the disk substrate at a portion corresponding to the groove 58.

A region d extending radially outward from a position in close proximity to and radially outward of the groove 58 is provided so as to form the signal area.

Further, the front end surface of the smaller diameter portion 56 and the front end surface of the region c slightly project from the front end surface of a region f extending radially outward from the outer circumferential edge of the region c so as to form a step of 10 to 60 µm, to thereby make the vicinity of the inner circumferential edge of the disk substrate thinner than the remaining portion.

Notably, in the present embodiment, the region c constitutes the first region, and the region f constitutes the second region.

The present invention is not limited to the above-described embodiments. Numeral modifications and variations of the present invention are possible in light of the spirit of the present invention, and they are not excluded from the scope of the present invention.

### INDUSTRIAL APPLICABILITY

The present invention can be applied to an injection molding machine for molding disk substrates.

## Claims

1. A mold for molding a disk **characterized by** comprising:
(a) a first mold plate;
(b) a first mirror-surface disk attached to the first mold plate;
(c) a second mold plate disposed to advance and retreat in relation to the first mold plate;
(d) a second mirror-surface disk attached to the second mold plate and forming a cavity in cooperation with the first mirror-surface disk in a mold-clamped condition;
(e) a stamper attached to one of the first and second mirror-surface disks and having a fine pattern formed on a front end surface thereof; and
(f) a bush extending through the other of the first and second mirror-surface disks, wherein
(g) on a front end surface of the other mirror-surface disk, the bush is disposed radially inward of a region for forming a clamp area.

2. A mold for molding a disk according to claim 1, wherein on the front end surface of the other mirror-surface disk, a first region provided to extend radially outward from an outer circumferential edge of the bush projects from a second region provided to extend radially outward from the first region so as to form a step between the first and second regions.

3. A mold for molding a disk according to claim 2, wherein a groove for forming a stack rib is formed on the front end surface of the other mirror-surface disk at a predetermined location.

4. A mold for molding a disk according to claim 3, wherein
(a) the groove is formed between the first and second regions; and
(b) the first region is a region for forming the clamp area.

5. A mold for molding a disk according to claim 3, wherein the groove is formed in the first region.

6. A mold for molding a disk according to claim 3, wherein the groove is formed in the second region.

7. A mirror-surface disk for a mold for molding a disk comprising a first mold plate; a first mirror-surface disk attached to the first mold plate; a second mold plate disposed to advance and retreat in relation to the first mold plate; a second mirror-surface disk attached to the second mold plate and forming a cavity in cooperation with the first mirror-surface disk in a mold-clamped condition; a stamper attached to one of the first and second mirror-surface disks and having a fine pattern formed on a front end surface thereof; and a bush extending through the other of the first and second mirror-surface disks, the other mirror-surface disk being **characterized in that**
(a) a through hole for disposing the bush is formed radially inward of a region for forming a clamp area; and
(b) a first region provided to extend radially outward from an outer circumferential edge of the through hole projects from a second region provided to extend radially outward from the first region so as to form a step between the first and second regions.

8. A mirror-surface disk according to claim 7, wherein a groove for forming a stack rib is formed on the front end surface at a predetermined location.

9. A mirror-surface disk according to claim 8, wherein
(a) the groove is formed between the first and second regions; and
(b) the first region is a region for forming the clamp area.

10. A mirror-surface disk according to claim 8, wherein the groove is formed in the first region.

11. A mirror-surface disk according to claim 8, wherein the groove is formed in the second region.

12. A molded product produced by charging a molding material into a cavity of a mold for molding a disk, the mold comprising a first mold plate; a first mirror-surface disk attached to the first mold plate; a second mold plate disposed to advance and retreat in relation to the first mold plate; a second mirror-surface disk attached to the second mold plate and forming the cavity in cooperation with the first mirror-surface disk in a mold-clamped condition; a stamper attached to one of the first and second mirror-surface disks and having a fine pattern formed on a front end surface thereof; and a bush extending through the other of the first and second mirror-surface disks, the molded product being **characterized in that** a clamp area is formed radially outward of the outer circumferential edge of a front end of the bush in the other mirror-surface disk.
